# FASCICULE DE BREVET EUROPEEN

(11) **EP 1 890 030 B1**
(45) Date de publication et mention de la délivrance du brevet: **17.09.2008**
(21) Numéro de dépôt: 06291313.2
(22) Date de dépôt: 16.08.2006
(51) Int. Cl.: F02M 55/00, F16L 37/138

(54) **Raccord à accouplement rapide**
Schnellkupplung
Quick connect coupling

(43) Date de publication de la demande: 20.02.2008
(73) Titulaire: Delphi Technologies, Inc., Troy, Michigan 48007 (US)
(72) Inventeur: Legrand, Philippe, 41350 Saint Gervais La Forêt (FR); Hausmann, Pascal, 41350 Vineuil (FR)
(74) Mandataire: Gregory, John David Charles

(56) Documents cités:
- EP-A2- 1 662 132
- DE-C1- 19 940 387
- DE-U1- 9 114 365
- DE-U1- 20 319 558
- US-A1- 2004 195 831

## Description

La présente invention concerne un raccord à accouplement rapide, en particulier un raccord utilisé dans un système d'alimentation en carburant comportant plusieurs injecteurs alimentant un moteur à combustion interne, notamment un moteur diesel.

Un raccord de ce genre est associé à chaque injecteur et a pour fonction de le relier à un conduit de retour de carburant vers un réservoir de carburant. Les injecteurs sont alimentés à l'aide d'une pompe à haute pression et le retour de carburant est en effet relativement important. Cette utilisation d'un raccord à accouplement rapide sur un injecteur de carburant est bien connue en soi et ne sera pas expliquée plus en détail.

Cependant, on connaît plusieurs types de tels raccords à accouplement rapide qui sont tous pourvus de moyens de liaison à un conduit de retour de carburant, d'un embout tubulaire pouvant être introduit dans un perçage effectué dans un injecteur pour former une sortie de carburant de retour, et de moyens de retenue de l'embout dans ce perçage.

Les figures 1 à 5 illustrent la structure et l'utilisation d'un tel raccord à accouplement rapide 1 actuellement utilisé pour relier un injecteur 2 à un conduit de retour (non représenté). L'injecteur 2 comporte à une de ses extrémités une buse d'injection 3 et à une autre extrémité une entrée axiale 4 de carburant sous haute pression.

Les figures 3 et 4 montrent le raccord à accouplement rapide 1 dans une vue latérale respectivement dans une vue de dessus.

Le raccord 1 comporte un corps creux cylindrique 5 qui à une extrémité arrière présente des moyens de liaison 6, 7 à un conduit de retour de carburant (non représenté sur les figures).

A une extrémité avant, le raccord 1 comporte un embout tubulaire 8 portant des moyens d'étanchéité sous forme d'un joint torique d'étanchéité 9. Cet embout tubulaire 8 peut être reçu dans un perçage 10 de l'injecteur 2 pour reposer dans un logement 11 au fond du perçage en communication avec l'intérieur de l'injecteur afin de recevoir le carburant de retour.

Le corps 5 du raccord 1 porte des moyens de retenue de l'embout tubulaire 8 dans le logement 11. Ces moyens de retenue comportent un cadre 12 portant deux bras élastiques 13 constituant des prolongements du cadre vers l'avant.

Le cadre 12 est globalement rectangulaire et enserre à l'extrémité arrière les moyens de liaison 6, 7 et à l'extrémité avant l'embout 8. Le côté du cadre 12 qui enserre l'embout 8 présente une forme incurvée adaptée à la surface extérieure de l'injecteur 2 pour venir se plaquer contre celle-ci lorsque l'embout est inséré dans le perçage 10.

Les deux bras élastiques 13 s'étendent de part et d'autre de l'embout 8 sensiblement parallèlement l'un à l'autre pour venir s'encliqueter sur l'injecteur 2 lorsque l'embout 8 est introduit dans le perçage 10. Pour améliorer la prise des bras 13 sur l'injecteur 2, celui-ci présente sur sa périphérie deux méplats 14 parallèles l'un à l'autre contre lesquels les bras peuvent reposer et les extrémités de ceux-ci sont déviées l'une vers l'autre de manière à venir en appui contre la face extérieure de l'injecteur et ainsi retenir le raccord en position contre celui-ci.

Le raccord à accouplement rapide 1 qui vient d'être décrit est cependant très limité dans son utilisation puisqu'il suppose que le perçage 10 est perpendiculaire à l'axe de l'injecteur 2 et qu'il y a suffisamment de place derrière celui-ci pour laisser passer les bras 13 pour leur encliquetage.

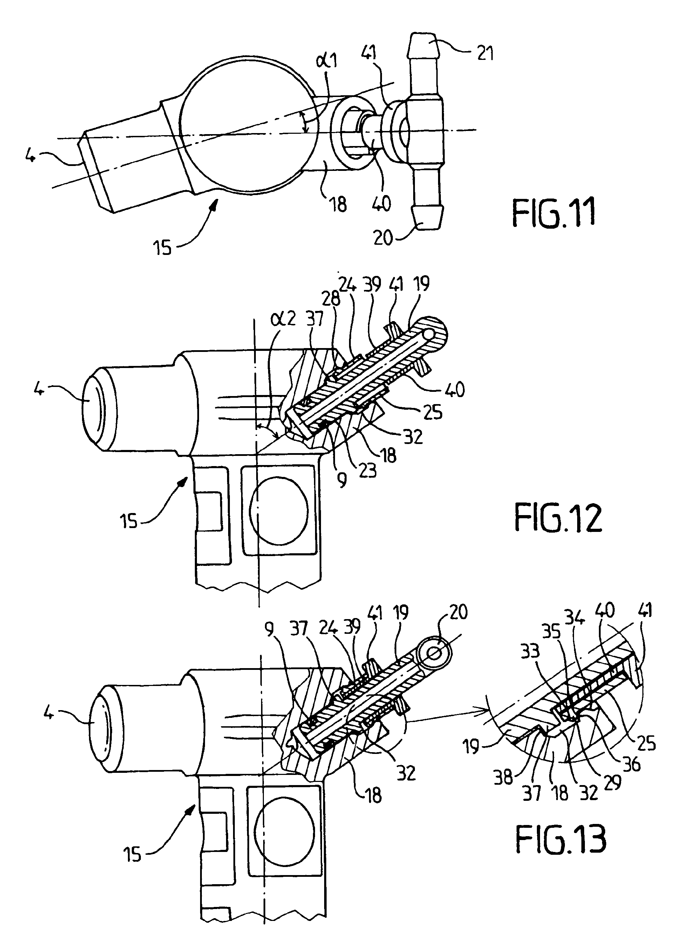

Autrement dit, il est impossible d'utiliser ce raccord lorsqu'on souhaite, par exemple à cause de l'environnement moteur, placer le raccord sous un certain angle dans un ou plusieurs plans simultanément comme cela est illustré par les angles α1 et α2 montrés sur les figures 11 et 12. Le besoin de placer le raccord sous un angle est particulièrement ressenti lorsque l'entrée de carburant est radiale par rapport à l'axe de l'injecteur.

On connaît également d'autres raccords à accouplement rapide comme illustré dans le document DE 203 19 558 U1 ou qui comme moyens de retenue du raccord sur l'injecteur utilisent une agrafe dont une première des branches est introduite dans un perçage afin de se loger dans une gorge de l'embout du raccord, alors que sa deuxième branche, qui comporte à son extrémité un moyen d'accrochage, entre dans un évidement pour ainsi retenir l'agrafe en place tout en permettant son extraction afin de libérer l'embout. Cependant, cette solution est relativement compliquée à mettre en oeuvre puisqu'elle nécessite un grand nombre d'opérations d'usinage à haute précision.

Le but de l'invention est de proposer un raccord à accouplement rapide qui permet son installation sous pratiquement n'importe quel angle par rapport à l'axe de l'injecteur, qui est simple à fabriquer et qui peut facilement être installé et désinstallé. En outre, ce raccord comporte selon un des modes de réalisation une double sécurité évitant toute fuite de carburant provoquée par une libération intempestive des moyens de retenue.

L'objet de l'invention est un raccord à accouplement rapide apte à relier un injecteur d'un moteur à combustion interne à un conduit de retour de carburant, comportant un corps creux globalement cylindrique présentant à une extrémité arrière des moyens de liaison audit conduit de retour de carburant, et à une extrémité avant un embout tubulaire portant des moyens d'étanchéité et apte à être reçu dans un logement formé dans un perçage sur la périphérie dudit injecteur en communication avec l'intérieur de celui-ci, ledit corps portant des moyens de retenue dudit embout tubulaire dans ledit logement, caractérisé en ce que lesdits moyens de retenue comportent deux languettes élastiques en arc de cercle s'étendant sur la périphérie dudit corps sensiblement concentriquement à l'axe de celui-ci, chacune desdites languettes définissant avec la périphérie dudit corps une fente en arc de cercle ouverte d'un côté, et en ce que lesdites languettes sont aptes à coopérer avec une gorge prévue à l'intérieur dudit perçage de l'injecteur.

Selon d'autres caractéristiques de l'invention :
- lesdites languettes portent à une extrémité libre un organe d'accrochage sous forme d'une protubérance apte à pénétrer dans ladite gorge ;
- une extrémité fixe de chaque languette est reliée audit corps par l'intermédiaire d'une nervure radiale sur ledit corps ;
- ladite nervure radiale d'une première languette est disposée diamétralement opposée à la nervure d'une deuxième languette ;
- l'épaisseur de ladite protubérance correspond sensiblement à l'épaisseur de ladite fente ;
- adite protubérance présente un profil bombé vers l'extérieur ;
- lesdites languettes sont dimensionnées pour faire saillie hors dudit perçage lorsque ledit embout est inséré dans celui-ci ;
- la flexion desdites languettes vers l'avant est délimitée par un collet sur la périphérie dudit corps ;
- ledit collet est apte à servir de butée contre un épaulement circulaire dans ledit perçage lors de l'introduction dudit embout dans celui-ci ;
- ledit corps, lesdits moyens de liaison, lesdites languettes, lesdites nervures et ledit collet sont venus de matière ;
- ledit raccord comporte en outre des organes intercalaires de blocage des languettes, ces organes de blocage présentant une forme en arc de cercle et étant aptes à être insérés dans une fente respective desdites fentes, suite à l'introduction dudit embout dans ledit perçage ;
- lesdits organes de blocage sont reliés à la face inférieure d'un anneau monté coulissant sur ledit corps ;
- lesdits organes de blocage définissent entre eux des évidements ouverts vers le bas et aptes à recevoir lesdites nervures lors de l'introduction desdits organes de blocage dans lesdites fentes ;
- ledit anneau est en un matériau élastique et est fendu afin de permettre son montage sur ledit corps par le côté ;
- lesdits organes de blocage s'étendent dans lesdites fentes et jusqu'à la languette suivante.

L'invention concerne également un raccord à accouplement rapide défini ci-dessus, caractérisé par le fait qu'il est associé à un raccord présentant les caractéristiques mentionnées ci-dessus, et par le fait qu'il est adapté pour coopérer avec des moyens de retenue prévus sur le raccord.

D'autres caractéristiques et avantages de l'invention ressortiront de la description qui va suivre d'un mode de réalisation non limitatif de l'invention, en référence aux figures annexées dans lesquelles :

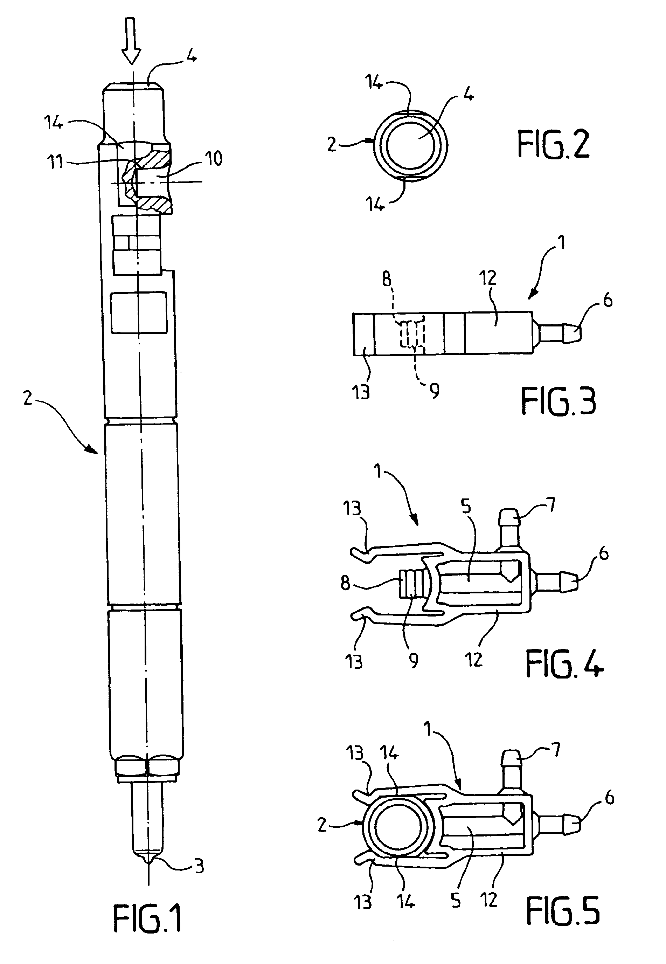

- les figures 1 et 2 montrent une vue latérale, partiellement en coupe, respectivement une vue de dessus d'un injecteur conçu pour recevoir un raccord à accouplement rapide connu ;
- les figures 3 et 4 montrent une vue latérale respectivement une vue de dessus, d'un raccord à accouplement connu apte à être monté sur l'inj ecteur illustré aux figures 1 et 2 ;
- la figure 5 montre schématiquement dans une vue de dessus le raccord des figures 3 et 4 monté sur l'injecteur des figures 1 et 2 ;

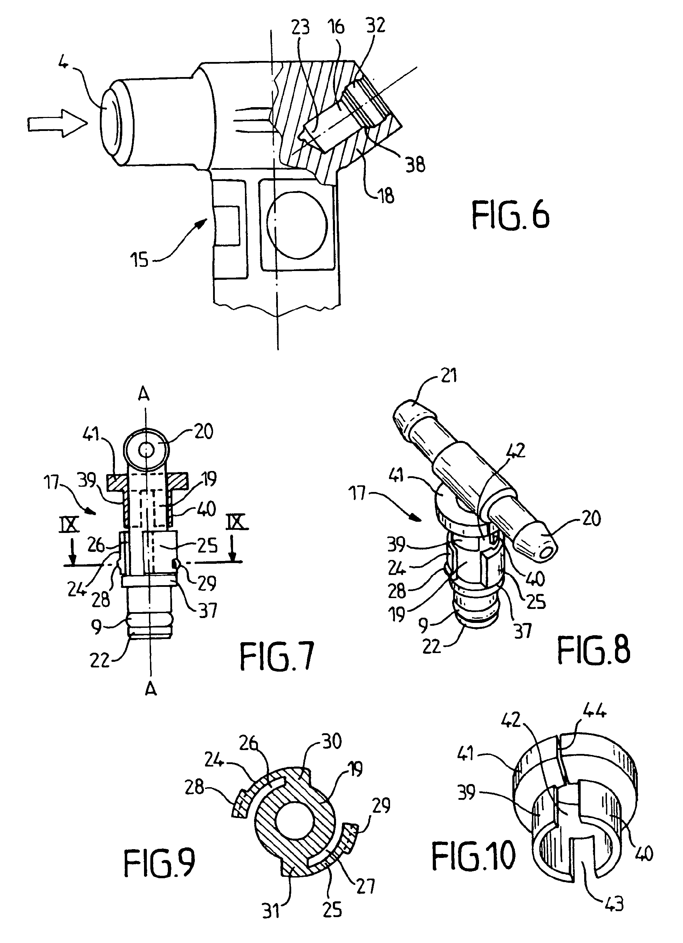

- la figure 6 montre une vue partielle, partiellement en coupe, d'un injecteur apte à recevoir un raccord à accouplement rapide selon l'invention ;
- la figure 7 est une vue latérale, partiellement en coupe, d'un raccord à accouplement rapide selon l'invention ;
- la figure 8 est une vue en perspective du raccord de la figure 7;
- la figure 9 est une vue en coupe selon la ligne IX-IX de la figure 7 ;
- la figure 10 est une vue en perspective de moyens intercalaires de blocage selon l'invention ;
- la figure 11 est une vue de dessus du raccord des figures 7 et 8 monté sur l'injecteur de la figure 6 ;
- la figure 12 est une vue latérale, partiellement en coupe, montrant la position des moyens intercalaires de blocage de la figure 10 avant leur insertion dans le perçage de l'injecteur ; et
- la figure 13 est une vue latérale, partiellement en coupe, montrant la position des moyens intercalaires de blocage de la figure 10 après leur insertion dans le perçage de l'injecteur. Une partie de la figure 13 a été rendue en plus grande échelle pour mieux montrer les détails.

La figure 6 montre une partie d'un injecteur 15 du type équipant un moteur à combustion interne. Cet injecteur 15 présente une entrée radiale 4 de carburant sous haute pression et il est pourvu d'un perçage 16 adapté pour recevoir un raccord à accouplement rapide 17 selon l'invention tel que représenté sur les figures 7 et 8. Le perçage 16 est effectué dans une tubulure 18 à une extrémité arrière de l'injecteur 15 et est en communication avec l'intérieur de celui-ci.

Le raccord 17, qui dans l'exemple illustré est un raccord en T, comporte un corps creux globalement cylindrique 19 présentant à une extrémité arrière des moyens de liaison 20, 21 permettant de relier le raccord à un conduit de retour de carburant (non représenté).

Le corps 19 présente à une extrémité avant un embout tubulaire 22 pourvu de moyens d'étanchéité sous forme d'un joint torique d'étanchéité 9. L'embout 22 est apte à être reçu dans un logement 23 au fond du perçage 16 (voir figure 12).

Le corps 19 porte des moyens de retenue de l'embout 22 dans le logement 23. Selon l'invention, ces moyens de retenue comportent deux languettes élastiques 24, 25 en arc de cercle s'étendant sensiblement concentriquement à l'axe A-A du corps.

Chacune des languettes élastiques 24, 25 définit avec la périphérie du corps 19 une fente en arc de cercle 26, 27 et porte à son extrémité libre un organe d'accrochage sous forme d'une protubérance 28, 29.

Chacune des languettes élastiques 24, 25 est reliée au corps 19 par l'intermédiaire d'une nervure radiale 30, 31 sur le corps pour déporter la languette respective vers l'extérieur de sorte que l'épaisseur de la fente correspondante 26, 27 corresponde sensiblement à l'épaisseur de la protubérance 28, 29. La nervure 30 de la première languette 24 est disposée diamétralement opposée à la nervure 31 de la deuxième languette 25.

Les protubérances 28, 29 sont aptes à pénétrer dans une gorge 32 formée dans la partie arrière du perçage 16 et peuvent lors de l'introduction de l'embout 22 du raccord 17 dans le perçage 16 s'escamoter élastiquement vers le corps 19 du raccord pour ensuite s'étendre dans la gorge 32 grâce au rappel élastique des languettes 24, 25.

Afin de faciliter l'introduction des languettes 24, 25 dans le perçage 16 de la tubulure 18 de l'injecteur 15, les protubérances 28, 29 présentent avantageusement une surface inférieure inclinée 33 formant rampe en venant en contact avec le bord autour de l'ouverture du perçage 16 qui de la même manière peut comporter une surface annulaire inclinée 34 du même angle pour mieux coopérer avec la surface inférieure 33. Ces détails sont au mieux représentés dans l'agrandissement d'une partie de la figure 13.

Afin de faciliter le retrait des languettes 24, 25 du perçage 16 de la tubulure 18 de l'injecteur 15, les protubérances 28, 29 présentent avantageusement en outre une surface supérieure inclinée 35 formant rampe en contact avec une surface inclinée 36 du même angle prévue dans la partie supérieure de la gorge 32.

Selon une variante non représentée sur les figures, les protubérances 28, 29 peuvent tout simplement présenter en coupe un segment de cercle et dans ce cas, les surfaces inclinées 34 et 36 ne sont plus indispensables. Il suffit, en effet, de prévoir un profil bombé d'une manière ou d'une autre vers l'extérieur.

Le raccord 17 comporte en outre un collet 37 disposé sur la périphérie du corps 19 immédiatement après les languettes 24, 25 de manière à délimiter la flexion de celles-ci vers l'avant lors du retrait de l'embout 22 du perçage 16.

Le collet 37 sert également de butée en venant en appui contre un épaulement circulaire 38 délimitant la gorge 32 dans le perçage 16 vers le bas. L'emplacement du collet 37 par rapport à l'épaulement 38 est tel qu'il détermine la longueur d'introduction du corps 29 dans le perçage 16.

Par ailleurs, les languettes 24, 25 sont dimensionnées pour faire saillie hors du perçage 16 lorsque l'embout se trouve dans son logement 23 dans le perçage pour permettre leur compression radiale lors du démontage du raccord 17.

Avantageusement, le corps cylindrique 19, les moyens de liaison 20, 21, les languettes 24, 25, les nervures 30, 31 et le collet 37 sont venus de matière, par exemple par moulage à injection d'une matière élastique telle que le polyamide.

Dans l'exemple illustré sur les figures, le raccord 17 comporte en outre des organes intercalaires de blocage 39, 40 des languettes 24, 25. Ces organes de blocage 39, 40 présentent une forme en arc de cercle et ils sont aptes à être insérés dans une fente respective 26, 27 après l'introduction de l'embout 22 dans le perçage 16 pour relier le raccord 17 à l'injecteur 15. De cette manière, les protubérances 28, 29 ne peuvent plus sortir de la gorge 32 et les languettes sont ainsi bloquées à l'intérieur du perçage 16.

Les organes de blocage 39, 40 sont avantageusement reliés à la face inférieure d'un anneau 41 monté coulissant sur le corps 19. Les organes de blocage 39, 40 définissent entre eux des encoches 42, 43 ouvertes vers le bas et aptes à recevoir les nervures 30, 31 lors de l'introduction des organes de blocage dans les fentes 26, 27. De préférence, les organes de blocage remplissent entièrement les fentes 26, 27 en s'étendant d'une nervure (30 ou 31) à la suivante.

Les organes de blocage 39, 40 constituent ainsi avec l'anneau 41 un ensemble ayant la forme générale d'un manchon à bride qui est avantageusement fabriqué en une seule pièce, aussi en matière élastique. Pour le montage sur le corps 19 de cet ensemble, l'anneau est fendu (44) jusqu'à une (42) des encoches. Cela permet son montage sur le corps 19 par le côté.

L'installation du raccord à accouplement rapide 17 sur l'injecteur 15 est particulièrement facile à partir de son état représenté à la figure 7 qui montre les organes de blocage 39, 40 retirés des fentes. Il suffit ensuite d'introduire l'embout 22 du raccord dans le perçage 16 jusqu'à ce que les protubérances 28, 29 viennent en contact avec le bord du perçage et de pousser ensuite pour que les languettes 24, 25 soient ainsi élastiquement repoussées radialement vers l'intérieur. On continue ce mouvement d'introduction jusqu'à ce que le collet 37 vienne en butée contre l'épaulement circulaire 38 du perçage, alors que simultanément, les protubérances 28, 29 viennent se loger dans la gorge 32 de manière à retenir le raccord dans cette position.

En même temps, les languettes 24, 25 reprennent la forme indiquée à la figure 9 et il est ensuite possible de déplacer les organes de blocage 39, 40 vers le bas en poussant sur l'anneau 41 pour que ces organes entrent dans les fentes 26, 27 de manière à bloquer entièrement les languettes à l'intérieur du perçage 16. Les organes de blocage 39, 40 apportent ainsi une double sécurité et il n'y a aucun risque que le raccord puisse être dégagé de manière non intentionnelle.

La désinstallation du raccord 17 est également très simple. On commence par déplacer les organes de blocage 39, 40 vers l'extérieur en tirant sur l'anneau 41 et ensuite, grâce au fait que les languettes 24, 25 font saillie hors du perçage 16, on peut les pincer pour sortir les protubérances 28, 29 de la gorge 32 du perçage et à partir de ce moment retirer l'ensemble du raccord sans problème.

Bien entendu, l'invention n'est pas limitée au mode de réalisation illustré et décrit, puisqu'un grand nombre de modifications peuvent être apportées par l'homme du métier sans pour autant sortir du cadre de l'invention.

## Revendications

1. Raccord à accouplement rapide apte à relier un injecteur (15) d'un moteur à combustion interne à un conduit de retour de carburant, comportant un corps creux globalement cylindrique (19) présentant à une extrémité arrière des moyens de liaison (20, 21) audit conduit de retour de carburant, et à une extrémité avant un embout tubulaire (22) portant des moyens d'étanchéité (9) et apte à être reçu dans un logement (23) formé dans un perçage (16) sur la périphérie dudit injecteur (15) en communication avec l'intérieur de celui-ci, ledit corps (19) portant des moyens de retenue (24, 25) dudit embout tubulaire (22) dans ledit logement (23), **caractérisé en ce que** lesdits moyens de retenue (24, 25) comportent deux languettes élastiques en arc de cercle s'étendant sur la périphérie dudit corps (19) sensiblement concentriquement à l'axe (A-A) de celui-ci, chacune desdites languettes (24, 25) définissant avec la périphérie dudit corps (19) une fente en arc de cercle (26, 27) ouverte d'un côté, et **en ce que** lesdites languettes (24, 25) sont aptes à coopérer avec une gorge (32) prévue à l'intérieur dudit perçage (16) de l'injecteur (15), le raccord comportant en outre des organes intercalaires de blocage (39, 40) des languettes (24, 25) aptes à être insérés dans une fente respective desdites fentes (26, 27), suite à l'introduction dudit embout (22) dans ledit perçage (16).

2. Raccord à accouplement rapide selon la revendication 1, **caractérisé en ce que** lesdites languettes (24, 25) portent à une extrémité libre un organe d'accrochage sous forme d'une protubérance (28, 29) apte à pénétrer dans ladite gorge (32).

3. Raccord à accouplement rapide selon la revendication 1 ou 2, **caractérisé en ce qu'**une extrémité fixe de chaque languette (24, 25) est reliée audit corps (19) par l'intermédiaire d'une nervure radiale (30, 31) sur ledit corps (19).

4. Raccord à accouplement rapide selon la revendication 3, **caractérisé en ce que** ladite nervure radiale (30) d'une première languette (24) est disposée diamétralement opposée à la nervure (31) d'une deuxième languette (25).

5. Raccord à accouplement rapide selon l'une quelconque des revendications 2 à 4, **caractérisé en ce que** l'épaisseur de ladite protubérance (28, 29) correspond sensiblement à l'épaisseur de ladite fente (26, 27).

6. Raccord à accouplement rapide selon l'une quelconque des revendications 3 à 5, **caractérisé en ce que** ladite protubérance (28, 29) présente un profil bombé vers l'extérieur.

7. Raccord à accouplement rapide selon l'une quelconque des revendications précédentes, **caractérisé en ce que** lesdites languettes (24, 25) sont dimensionnées pour faire saillie hors dudit perçage (16) lorsque ledit embout (22) est inséré dans celui-ci.

8. Raccord à accouplement rapide selon l'une quelconque des revendications précédentes, **caractérisé en ce que** la flexion desdites languettes (24, 25) vers l'avant est délimitée par un collet (37) sur la périphérie dudit corps (19).

9. Raccord à accouplement rapide selon la revendication 8, **caractérisé en ce que** ledit collet (37) est apte à servir de butée contre un épaulement circulaire (38) dans ledit perçage (19) lors de l'introduction dudit embout (22) dans celui-ci.

10. Raccord à accouplement rapide selon la revendication 8 ou 9, **caractérisé en ce que** ledit corps (19), lesdits moyens de liaison (20, 21), lesdites languettes (24, 25), lesdites nervures (30, 31) et ledit collet (37) sont venus de matière.

11. Raccord à accouplement rapide selon l'une des revendications précédentes, **caractérisé en ce que** lesdits organes de blocage présentent une forme en arc de cercle.

12. Raccord à accouplement rapide selon la revendication 11, **caractérisé en ce que** lesdits organes de blocage (39, 40) sont reliés à la face inférieure d'un anneau (41) monté coulissant sur ledit corps (19).

13. Raccord à accouplement rapide selon la revendication 12, **caractérisé en ce que** lesdits organes de blocage (39, 40) définissent entre eux des évidements (42, 43) ouverts vers le bas et aptes à recevoir lesdites nervures (30, 31) lors de l'introduction desdits organes de blocage (39, 40) dans lesdites fentes (26, 27).

14. Raccord à accouplement rapide selon la revendication 12 ou 13, **caractérisé en ce que** ledit anneau (41) est en un matériau élastique et est fendu (44) afin de permettre son montage sur ledit corps (19) par le côté.

15. Raccord à accouplement rapide selon l'une quelconque des revendications 11 à 14, **caractérisé en ce que** lesdits organes de blocage (39, 40) s'étendent dans lesdites fentes (26, 27) et jusqu'à la languette suivante (24, 25).

16. Injecteur pour moteur à combustion interne, **caractérisé par le fait qu'**il est associé à un raccord (17) selon l'une quelconque des revendications 1 à 15 et en ce qu'il est adapté pour coopérer avec des moyens de retenue (24, 25) prévus sur ledit raccord.

## Claims

1. Quick-coupling joint able to connect an injector (15) of an internal combustion engine to a fuel return pipe, including a generally cylindrical hollow body (19) presenting at a rear end means for connection (20, 21) to the said fuel return pipe, and at a front end a tubular nozzle (22) carrying sealing means (9) and able to be received in a housing (23) formed in a bore (16) on the periphery of the said injector (15) in communication with the inside of the latter, the said body (19) carrying means (24, 25) for retaining the said tubular nozzle in the said housing (23), **characterised by** the fact that the said retaining means (24, 25) include two elastic tongues in an arc of circle extending on the periphery of the said body (19) substantially concentrically with the axis A-A of the latter, each of the said tongues (24, 25) defining with the periphery of the said body (19) a slot in an arc of circle (26, 27) open on one side, and by the fact that the said tongues (24, 25) are able to co-operate with a groove (32) provided inside the said bore (16) of the injector (15), the joint also including intercalary organs (39, 40) for locking the tongues (24, 25) able to be inserted in a respective slot of the said slots (26, 27), following introduction of the said nozzle (22) into the said bore (16).

2. Quick-coupling joint as described in claim 1, **characterised by** the fact that the said tongues (24, 25) carry at a free end a catching organ in the form of a protuberance (28, 29) able to enter the said groove (32).

3. Quick-coupling joint as described in claim 1 or 2, **characterised by** the fact that a fixed end of each tongue (24, 25) is joined to the said body (19) by means of a radial flange (30, 31) on the said body (19).

4. Quick-coupling joint as described in claim 3, **characterised by** the fact that the said radial flange (30) of a first tongue (24) is arranged diametrically opposite to the flange (31) of a second tongue (25).

5. Quick-coupling joint as described in any one of claims 2 to 4, **characterised by** the fact that the thickness of the said protuberance (28, 29) substantially corresponds to the thickness of the said slot (26, 27).

6. Quick-coupling joint as described in any one of claims 3 to 5, **characterised by** the fact that the said protuberance (28, 29) presents an outwardly convex shape.

7. Quick-coupling joint as described in any one of the preceding claims, **characterised by** the fact that the said tongues (24, 25) are dimensioned so as to project from the said bore (16) when the said nozzle (22) is inserted in it.

8. Quick-coupling joint as described in any one of the preceding claims, **characterised by** the fact that the flexing of the said tongues (24, 25) towards the front is delimited by a collar (37) on the periphery of the said body (19).

9. Quick-coupling joint as described in claim 8, **characterised by** the fact that the said collar (37) is able to act as a stop against a circular shoulder (38) in the said bore (19) on introduction of the said nozzle (22) into it.

10. Quick-coupling joint as described in claim 8 or 9, **characterised by** the fact that the said body (19), the said connection means (20, 21), the said tongues (24, 25), the said flanges (30, 31) and the said collar (37) are made in one piece.

11. Quick-coupling joint as described in one of the preceding claims, **characterised by** the fact that the said locking organs have the shape of an arc of circle.

12. Quick-coupling joint as described in claim 11, **characterised by** the fact that the said locking organs (39, 40) are joined to the lower face of a ring (41) mounted slidingly on the said body (19).

13. Quick-coupling joint as described in claim 12, **characterised by** the fact that the said locking organs (39, 40) define between them downwardly open cavities (30, 31) able to receive the said flanges (30, 31) on introduction of the said locking organs 39, 40) into the said slots (26, 27).

14. Quick-coupling joint as described in claim 12 or 13, **characterised by** the fact that the said ring (41) is made of an elastic material and is split (44) to allow it to be mounted on the said body (19) from the side.

15. Quick-coupling joint as described in any one of claims 11 to 14, **characterised by** the fact that the said locking organs (39, 40) extend in the said slots (26, 27) and up to the next tongue (24, 25).

16. Injector for internal combustion engine, **characterised by** the fact that it is associated with a joint (17) as described in any one of claims 1 to 15 and by the fact that it is suitable to co-operate with retaining means (24, 25) provided on the said joint.

## Patentansprüche

1. Schnellkupplung zur Verbindung einer Einspritzdüse (15) eines Verbrennungsmotors mit einer Kraftstoffrückleitung, umfassend einen allgemein zylindrischen hohlen Körper (19), der an einem hinteren Ende Mittel (20, 21) zur Verbindung mit der Kraftstoffrückleitung und an einem vorderen Ende einen rohrförmigen Ansatz (22) aufweist, der Dichtungsmittel (9) trägt und in einer Aufnahme (23) aufgenommen werden kann, die in einer Bohrung (16) am Umfang der Einspritzdüse (15) in Verbindung mit deren Innerem gebildet ist, wobei dieser Körper (19) Mittel (24, 25) zum Zurückhalten dieses rohrförmigen Ansatzes (22) in der Aufnahme (23) trägt, **dadurch gekennzeichnet, dass** die Rückhaltemittel (24, 25) zwei kreisbogenförmige elastische Zungen umfassen, die sich auf dem Umfang des Körpers (19) im Wesentlichen konzentrisch zu dessen Achse (A-A) erstrecken, wobei jede dieser Zungen (24, 25) mit dem Umfang des Körpers (19) einen kreisbogenförmigen, auf einer Seite offenen Schlitz (26, 27) begrenzt, und dass die Zungen (24, 25) mit einer im Inneren der Bohrung (16) der Einspritzdüse (15) vorgesehenen Nut (32) zusammenwirken können, wobei die Kupplung außerdem Einlageorgane (39, 40) zur Blockierung der Zungen (24, 25) umfassen, die jeweils in einen Schlitz dieser Schlitze (26, 27) nach der Einführung des Ansatzes (22) in die Bohrung (16) eingesetzt werden können.

2. Schnellkupplung nach Anspruch 1, **dadurch gekennzeichnet, dass** die Zungen (24, 25) an einem freien Ende ein Einhakorgan in Form eines Vorsprungs (28, 29) tragen, der in die Nut (32) eintreten kann.

3. Schnellkupplung nach Anspruch 1 oder 2, **dadurch gekennzeichnet, dass** ein feststehendes Ende jeder Zunge (24, 25) mit dem Körper (19) über eine radiale Rippe (30, 31) an diesem Körper (19) verbunden ist.

4. Schnellkupplung nach Anspruch 3, **dadurch gekennzeichnet, dass** die radiale Rippe (30) einer ersten Zunge (24) diametral entgegengesetzt zu der Rippe (31) einer zweiten Zunge (25) angeordnet ist.

5. Schnellkupplung nach einem der Ansprüche 2 bis 4, **dadurch gekennzeichnet, dass** die Dicke des Vorsprungs (28, 29) im Wesentlichen der Dicke des Schlitzes (26, 27) entspricht.

6. Schnellkupplung nach einem der Ansprüche 3 bis 5, **dadurch gekennzeichnet, dass** der Vorsprung (28, 29) ein nach außen gewölbtes Profil aufweist.

7. Schnellkupplung nach einem der vorhergehenden Ansprüche, **dadurch gekennzeichnet, dass** die Zungen (24, 25) so bemessen sind, dass sie aus der Bohrung (16) herausragen, wenn der Ansatz (22) in diese eingesetzt ist.

8. Schnellkupplung nach einem der vorhergehenden Ansprüche, **dadurch gekennzeichnet, dass** die Biegung der Zungen (24, 25) nach vorne durch einen Ring (37) am Umfang des Körpers (19) begrenzt ist.

9. Schnellkupplung nach Anspruch 8, **dadurch gekennzeichnet, dass** der Ring (37) als Anschlag an einer kreisförmigen Schulter (38) in der Bohrung (19) bei der Einführung des Ansatzes (22) in diese dienen kann.

10. Schnellkupplung nach Anspruch 8 oder 9, **dadurch gekennzeichnet, dass** der Körper (19), die Verbindungsmittel (20, 21), die Zungen (24, 25), die Rippen (30, 31) und der Ring (37) einstückig ausgeführt sind.

11. Schnellkupplung nach einem der vorhergehenden Ansprüche, **dadurch gekennzeichnet, dass** die Blockierorgane eine Kreisbogenform aufweisen.

12. Schnellkupplung nach Anspruch 11, **dadurch gekennzeichnet, dass** die Blockierorgane (39, 40) mit der Unterseite eines Rings (41) verbunden sind, der auf dem Körper (19) verschiebbar montiert ist.

13. Schnellkupplung nach Anspruch 12, **dadurch gekennzeichnet, dass** die Blockierorgane (39, 40) miteinander nach unten offene Aussparungen (42, 43) bilden, die die Rippen (30, 31) bei der Einführung der Blockierorgane (39, 40) in die Schlitze (26, 27) aufnehmen können.

14. Schnellkupplung nach Anspruch 12 oder 13, **dadurch gekennzeichnet, dass** der Ring (41) aus einem elastischen Werkstoff besteht und gespalten (44) ist, um seine Montage auf dem Körper (19) von der Seite zu gestatten.

15. Schnellkupplung nach einem der Ansprüche 11 bis 14, **dadurch gekennzeichnet, dass** die Blockierorgane (39, 40) sich in diesen Schlitzen (26, 27) und bis zu der folgenden Zunge (24, 25) erstrekken.

16. Einspritzdüse für einen Verbrennungsmotor, **dadurch gekennzeichnet, dass** ihr eine Kupplung (17) nach einem der Ansprüche 1 bis 15 zugeordnet ist und dass sie dafür ausgelegt ist, mit an der Kupplung vorgesehenen Rückhaltemitteln (24, 25) zusammenzuwirken.
